# EUROPÄISCHE PATENTSCHRIFT

(11) **EP 2 604 352 B1**
(45) Veröffentlichungstag und Bekanntmachung des Hinweises auf die Patenterteilung: **16.03.2016**
(21) Anmeldenummer: 12195779.9
(22) Anmeldetag: 06.12.2012
(51) Int. Cl.: B21B 38/00, G01B 11/25

(54) **Verfahren zur Überwachung des Fertigungsprozesses von warmgefertigten Rohren aus Stahl**
Method for monitoring the production process of hot-finished pipes made of steel
Procédé de surveillance du processus de fabrication de tubes en acier fabriqués à chaud

(30) Priorität: 14.12.2011 DE 102011056421
(43) Veröffentlichungstag der Anmeldung: 19.06.2013
(73) Patentinhaber: Vallourec Deutschland GmbH, 40472 Düsseldorf (DE)
(72) Erfinder: Deppe, Gerd-Joachim, 47809 Krefeld (DE); van der Logt, Mark, 45149 Essen (DE)
(74) Vertreter: Moser Götze & Partner Patentanwälte mbB

(56) Entgegenhaltungen:
- EP-A1- 1 378 299
- DE-A1- 4 037 383
- DE-A1-102010 011 217
- DE-B3-102005 009 482

## Beschreibung

Die Erfindung betrifft ein Verfahren zur Überwachung eines ein Pilgerschrittverfahren umfassenden Fertigungsprozesses warmgewalzter Rohre aus Stahl, bei dem Art und Ausprägung von durch einen Walzvorgang an einer Außenoberfläche eines Rohres erzeugter Strukturen zu einer Beurteilung des Prozesszustandes ausgewertet werden.

Aus der deutschen Patentschrift DE 10 2005 009 482 B3 ist ein Verfahren zur Überwachung und Beurteilung des Prozesszustands eines Schrägwalzprozesses zur Herstellung von Hohlblockrohren bekannt, bei dem variierende Wanddicken der gefertigten Hohlblockrohre zu Temperaturschwankungen führen, die thermografisch erfasst werden.

Des Weiteren ist aus der deutschen Offenlegungsschrift DE 10 2010 011 217 A1 ein Lichtschnittverfahren bekannt, das zur Messung der Profilgeometrie eines Rohres verwendet wird.

Beim Pilgerverfahren oder Pilgerschrittverfahren wird ein beispielsweise in einem Schrägwalzwerk erzeugter Hohlblock zu einem Rohr von großer Länge und mit geringer Wanddicke ausgewalzt. Im Pilgergerüst befinden sich zwei übereinander angeordnete konisch kalibrierte Walzen, die entgegen der Walzrichtung betrieben werden. Zwischen diese Walzen wird der dickwandige Hohlblock auf einem zylindrischen Dorn eingeführt. Das sogenannte Pilgermaul erfasst den Hohlblock und drückt von außen eine kleine Werkstoffwelle ab, die anschließend vom Glättkaliber auf dem Pilgerdorn zu der vorgesehenen Wanddicke ausgestreckt wird. Entsprechend dem Drehsinn der Walzen wird dabei der Pilgerdorn mit dem darauf befindlichen Hohlblock nach rückwärts - also gegen die Walzrichtung - bewegt, bis das Leerlaufkaliber das Walzgut frei gibt. Bei gleichzeitiger Drehung wird das Rohr um ein weiteres Stück zwischen die Walzen gebracht und der Walzvorgang beginnt von neuem.

Im Rahmen der Überwachung des Fertigungsprozesses von warmgefertigten Rohren, insbesondere von Hohlblockrohren, sollen möglichst frühzeitig u. a. Aussagen über den Prozesszustand bzw. die Stabilität des Walzprozesses gewonnen werden, weil die Eigenschaften des Endproduktes, d. h. des Fertigrohres, maßgeblich hiervon beeinflusst werden.

Ein entscheidender Qualitätsparameter ist hierbei neben den mechanisch technologischen Materialeigenschaften insbesondere die Topografie des gewalzten Rohres, die im Produktionsprozess in verschiedenen Fertigungsstufen am Rohr gemessen und überwacht wird. Die Topographie sollte möglichst frei von Fehlern sein, d.h. eine den Anforderungen entsprechende glatte Oberfläche vorliegen.
Beim Pilgern von Rohren treten allerdings charakteristische verfahrensbedingte Oberflächenstrukturen auf, die unkritisch sind, solange Durchmesser, Form und lokale Tiefe unterhalb vorgegebener Grenzwerte liegen.

Beim Pilgern von Rohren können aber auch, z.B. bei zu großem Vorschub, Oberflächenstrukturen auftreten, die sich als sogenannte "Pilgerbuckel" darstellen. Diese Pilgerbuckel zeigen sich als periodisch an der Rohroberfläche auftretende dreidimensionale Muster, die je nach zu walzender Rohrgeometrie und zu walzendem Werkstoff in ihrer Ausprägung (Durchmesser, Form, lokale Tiefe) unterschiedlich und unerwünscht sind.

Neben diesen kontinuierlich auftretenden verfahrensbedingten Mustern an der Rohroberfläche gibt es auch nicht kontinuierlich auftretende Geometrieabweichungen, wie z. B. Exzentrizität, Wandeinseitigkeiten oder Polygonalität.

Der Prozess des Pilgerns ist bekanntermaßen komplex und wird bestimmt durch eine Vielzahl von Einflussgrößen, wie z. B. Einstellparameter und Walzgut. Nachfolgend sind einige Einflussgrößen aufgeführt:
- Vorschubrate pro Umdrehung
- Drallwinkel
- Drehzahl
- Verzögerung Beschleunigung im vorderen Endpunkt
- Verzögerung Beschleunigung im hinteren Endpunkt
- Kalibrierung der Pilgerwalzen und Pilgerdorne
- Haftreibungsbedingungen zwischen den Werkzeugen und dem Walzgut
- Werkstoff

Nach dem bekannten Stand der Technik gibt es zwar "Grundeinstellungen" für den Walzprozess in Abhängigkeit von der zu erzeugenden Rohrgeometrie und dem eingesetzten Werkstoff, der Walzprozess selbst wird aber durch den Steuermann typischerweise zu einem großen Teil auf Basis subjektiver Wahrnehmungen während des Prozessablaufs gesteuert unter anderem aufgrund von visuellen Beobachtungen der Rohroberfläche.

Da mit dieser Verfahrensweise eine gleichmäßige Überwachung des Prozesszustandes und der Steuerung des Fertigungsprozesses nicht realisiert werden kann, ist es Aufgabe der Erfindung ein entsprechend verbessertes, möglichst automatisiertes Verfahren anzugeben, welches einfach und kostengünstig zu handhaben ist und mit dem möglichst zeitnahe Aussagen über den Prozesszustand bzw. die Prozessstabilität des Walzprozesses getroffen werden können.

Eine weitere Aufgabe besteht darin, dieses Verfahren dahingehend zu optimieren, dass etwaige die Prozessstabilität des Walzprozesses negativ beeinflussende Ereignisse frühzeitig erkannt werden und so eine gezielte Korrektur des Prozesses möglich wird.

Diese Aufgabe wird durch ein Verfahren mit den Merkmalen des Anspruches 1 gelöst. Vorteilhafte Ausgestaltungen der Erfindung sind in den Ansprüchen 2 bis 8 angegeben.

Erfindungsgemäß wird bei einem Verfahren zur Überwachung eines ein Pilgerschrittverfahren umfassenden Fertigungsprozesses warmgewalzter Rohre aus Stahl, bei dem Art und Ausprägung von durch einen Walzvorgang an einer Außenoberfläche eines Rohres erzeugter Strukturen zu einer Beurteilung des Prozesszustandes ausgewertet werden, eine Verbesserung und möglichst eine Automatisierung, dadurch erreicht, dass im unmittelbaren Anschluss an den Walzvorgang im auslaufseitigen Bereich eines Walzgerüstes die Außenoberfläche mindestens eines definierten Abschnittes des Rohres mittels eines optischen Lichtschnittverfahrens zeilenweise und getaktet in Form von Profillinien messtechnisch erfasst wird, die Profillinien anschließend zu einer mindestens zweidimensionalen Topografie zusammengesetzt werden und die Topografie zu einer Beurteilung des Prozesszustandes ausgewertet wird.

Zur berührungslosen Erfassung der Rohroberflächenstruktur werden gemäß vorliegender Erfindung kontinuierlich Rohroberflächenabschnitte direkt im Auslauf des letzten Pilgergerüstes mit Hilfe eines optischen Lichtschnittverfahrens messtechnisch erfasst. Einzeln nacheinander zeilenweise aufgenommene Profillinien werden nach einer vorteilhaften Weiterbildung der Erfindung bei fortlaufender Rohrbewegung - typischerweise eine Kombination von Achsial- und Rotationsbewegung, vergleichbar mit den namengebenden Pilgerschritten - zu dreidimensionalen Oberflächenkonturen zusammengesetzt. Für eine maßstabsgerechte Aufnahme der Rohroberfläche ist eine Synchronisation von Profillinienerfassung und Rohrbewegung erforderlich - in Form einer externen Triggerung der Profillinienerfassung durch adaptierte zweidimensional aufgenommene Weginkrementimpulse.

Bei der Synchronisation können wahlweise auch gezielt nur bestimmte Bewegungsphasen der Rohre im Auslauf des Pilgergerüstes zur Aufnahme ausgewählt werden.

Die vorliegende Erfindung betrifft die optische Profilmessung, die berührungslos nach dem Lichtschnitt-Verfahren als einem an sich bekannten zweidimensionalen Triangulations-Verfahren erfolgt.

Der innovative Ansatz der vorliegenden Erfindung besteht darin, die aus der Erfassung und Auswertung der Oberflächentopografie resultierenden Rückschlüsse auf prozessbedingte Ursachen für die Überwachung und Steuerung des Walzprozesses zu nutzen.

Bei der Messung kann bei einer vorhandenen Relativbewegung zwischen Sensor und Messobjekt durch Zusammenfügen aus den sukzessive aufgenommenen "Profilschnitten" als Höhenprofil eine daraus zusammengesetzte zweidimensionale Kontur eines Profils oder durch Auswertung mehrerer Umfangskonturen und der Profillänge eine dreidimensionale Topografie der Außenkontur des Messobjektes, wie z. B. eines Rohres, aufgebaut werden.

Die im Rahmen der vorliegenden Erfindung betrachtete Profilmessung basiert in ihrer eindimensionalen Form auf der bekannten Punkttriangulation, bei der ein Laser und ein zeilenförmiger positionsempfindlicher Detektor den Triangulations-Sensor bilden. Laserstrahl-Achse und optische Achse des Detektors spannen eine als "Normalebene" bezeichnete Ebene auf und stehen im Triangulations-Winkel zueinander. Üblicherweise stellt der Abstand des Messobjektes vom Sensor in Richtung des Laserstrahls die Messgröße dar. Bekannt ist dieses Verfahren beispielsweise aus der DE 40 37 383 A1.

Bei der zweidimensionalen Erweiterung der Punkttriangulation ist der punktförmige Laserstrahl durch einen Laserstrahlfächer und der eindimensionale zeilenförmige Detektor durch einen zweidimensionalen flächigen Detektor ersetzt. Der Laser erzeugt dabei als Messfeld einen Laserstrahlfächer, dessen von der Oberfläche des Prüfobjektes rückgestreute Strahlen von einem Objektiv und einem zweidimensionalen flächigen Detektor empfangen und abgebildet werden. Objektiv und Detektor bilden dabei eine zweidimensional arbeitende Flächenbild-Kamera. Der Laserstrahl-Fächer wird typischerweise durch eine vor dem punktförmigen Laserstrahl-Austritt angebrachte diffraktive Optik generiert und erzeugt so auf dem Messobjekt eine als "Lichtschnitt-Linie" bezeichnete eindimensionale Linie.

Charakteristisch für das optische Lichtschnittverfahren können der Erfassungsbereich und damit im Allgemeinen die Ortsauflösung, sowie die Profilrate z. B. an den Rohrdurchmesser und die Rohrgeschwindigkeit angepasst werden.

In einer verbesserten Weiterbildung der Erfindung geschieht die Erfassung und Auswertung automatisiert, wobei entweder dem Steuermann Vorgaben für Korrekturen bei den Einstellparametren gemacht werden oder in einer noch weiter verbesserten Ausbildung die Korrekturen automatisch erfolgen.

Dabei wird das erfindungsgemäße Verfahren ergänzt um eine spezifische Muster- und Größenanalyse der aufgenommenen Oberflächenstrukturen als Werkzeug, mit dem bereits direkt während des Walzprozesses "online" geeignete Einstellparameter für das Pilgergerüst gewonnen werden können. Die Analyse kann insbesondere bezüglich charakteristischer Parameter der aufgenommenen Strukturen, wie zum Beispiel Lateralausdehnung, Tiefe, Formfaktoren, Periodizität oder Abstände, erfolgen.

Die beim diskontinuierlichen Pilgerwalzen auftretende Oberflächentopographie ist grundsätzlich in Umfangs- und Längsrichtung periodisch (wiederkehrende Oberflächenstruktur). Anhand dieser Strukturen lassen sich mehrere messbare Effekte ableiten, die eindeutig auf die oben beschriebenen Parameter zurück zu führen sind.

Beispiel 1: Die in Umfangsrichtung ausgerichteten Strukturen müssen in regelmäßigen radialen Winkelabständen zueinander angeordnet sein. Erfasst die Messanordnung Abweichungen von diesen regelmäßigen Strukturen, wird mittels Steuerungsalgorithmus der Drallwinkel dynamisch geregelt.

Beispiel 2: Die in Längsrichtung auftretenden Strukturen müssen ebenfalls in regelmäßigen Abständen zueinander angeordnet sein. Verändern sich die Messabstände dieser Strukturen über die Rohrlänge bzw. Überschreiten die Strukturen die geforderten Toleranzen, müssen mittels Steuerungsalgorithmus unter anderem die Drehzahl und die Vorschubrate angepasst werden.

Damit ist eine frühzeitige Reaktion und falls erforderlich schnelle Korrektur der Einstellparameter zur Optimierung des Walzprozesses möglich.

Bei umfangreichen Versuchen hat sich gezeigt, dass bei der Herstellung von warmgepilgerten Rohren eine direkte Korrelation zwischen der erfassten Oberflächentopografie und dem aktuellen Prozesszustand vorhanden ist.

Ein instabiler werdender Fertigungsprozess zeigt sich z. B. in einer deutlichen Veränderung der periodisch auftretenden Strukturen in der quantitativen und qualitativen Ausbildung (Form, Größe und Abstand) auf der Oberfläche.

Vorteilhafter Weise wird die Außenoberfläche des Rohres orts- und zeitaufgelöst erfasst und die hieraus zusammengesetzte Topografie mit einem Referenzbild eines als Referenzkörper dienenden bereits gewalzten Rohres gleicher Stahlgüteklasse und gleicher Nennabmessung des jeweils gleichen Messortes verglichen und zu einer Beurteilung des Prozesszustandes ausgewertet. Hierbei werden aus einer Topografie des Rohres an einem bestimmten Messort etwaig auftretende Strukturen der Oberfläche des Rohres ermittelt, die ermittelten Strukturen mit Strukturen einer Topografie des Referenzkörpers für den gleichen Messort verglichen und eine signifikante Abweichung zwischen den Strukturen zu einer Beurteilung des Prozesszustandes ausgewertet.

Der große Vorteil dieses Verfahrens liegt darin, dass es jetzt möglich ist, mit einem relativ geringen messtechnischen Aufwand die Oberflächentopografie berührungslos direkt im Auslauf des Pilgergerüstes zu erfassen, wodurch bei etwaig auftretenden nicht tolerablen Abweichungen unmittelbar eine Korrektur der Einstellparameter vorgenommen werden kann. Somit wird allein durch eine qualitative und quantitative Beurteilung der Strukturen der Topografie der Rohroberfläche eine fundierte Aussage über den aktuellen Prozesszustand ermöglicht.

Vorteilhaft bietet dieses Verfahren in einer weiteren Ausgestaltung die Möglichkeit, aus einer Vielzahl von zuvor an Referenzkörpern gleicher Stahlgüte und Durchmesser ermittelten Topografien einen Toleranzbereich für Fehlererscheinungen festzulegen, bei dessen Überschreitung durch die ermittelten Ist-Abweichungen des in der Fertigung befindlichen Rohres ein Signal ausgelöst wird.

Durch die erfindungsgemäße Erfassung der Oberflächentopografie, die mit den an Referenzkörpern erfassten Topografien zeitnah im Prozessverlauf verglichen wird, ist es möglich, die Prozessstabilität bzw. Veränderungen in der Prozessstabilität zu beurteilen und bei Überschreiten von festgelegten Grenzen entsprechende Maßnahmen einzuleiten.

Etwaige die Prozessstabilität beeinflussende Ereignisse, für die zuvor Topografien an entsprechenden Referenzrohren ermittelt wurden, können nun mit den Messwerten des aktuellen Walzprozesses verglichen und bei Überschreiten einer Toleranzgrenze der Bezug zum jeweiligen Ereignis hergestellt werden.

Vorteilhafter Weise kann in einer Ausführungsform das Signal zum Messort am Rohr zugeordnet und ein Bezug zu einem zur Überschreitung der Toleranzgrenzen führenden Ereignis im Fertigungsprozess hergestellt werden.

Das Verfahren kann vorteilhaft dahingehend weiter optimiert werden, dass die jeweils für das gefertigte Rohr ermittelte Zuordnung von Messsignal und Ereignis in einer Datenbank der Auswerteeinheit für jeden Referenzkörper der gleichen Stahlgüteklasse Durchmesser und Wanddicke hinterlegt und bei Überschreiten der Toleranzgrenzen das dazu führende Ereignis angezeigt wird und als Steuergröße für den Fertigungsprozess verwendet wird.

Durch diesen Selbstlerneffekt wird quasi ein Expertensystem aufgebaut, welches mit der kontinuierlichen Hinterlegung der Zuordnung von angezeigtem Signal und stattgefundenem Ereignis für das jeweilige Rohr zunehmend sicherere und zeitnahe Aussagen über die Prozessstabilität und über die, die Prozessstabilität beeinflussenden Faktoren, ermöglicht.

Darüber hinaus bietet es sich an, aus diesen Erkenntnissen Korrekturmaßnahmen für den Fertigungsprozess abzuleiten, um letztendlich möglichst konstante Produkteigenschaften bei möglichst störungsarmem Fertigungsablauf zu erzielen.

In einer vorteilhaften Ausgestaltung des Verfahrens ist es ebenfalls möglich, auch die Ist-Werte der Wanddicke am gewalzten Rohr zu ermitteln. Hierbei wird unmittelbar nach Austritt aus dem Walzwerk z. B. mittels Laser-Ultraschalltechnik die Wanddicke des Rohres orts- und zeitaufgelöst erfasst und durch Überlagerung einer ebenfalls orts- und zeitaufgelösten Erfassung der Oberflächentopografie eine Abbildung der Rohrinnenkontur erzeugt. Somit kann mit diesem Verfahren zusätzlich das Rohr auf Veränderungen an der Innenoberfläche untersucht werden, so dass z. B. ein Verschleiß der Dornstange frühzeitig erkannt wird.

Mit diesem innovativen Verfahren zur Überwachung des Fertigungsprozesses von warmgefertigten Rohren ist es möglich, den Walzprozess zu überwachen, zu korrigieren und eine Aussage über die komplette Wanddicke bzw. Wanddickenverteilung des fertigen Rohres zu treffen.

Weitere Merkmale, Vorteile und Einzelheiten der Erfindung ergeben sich aus der nachfolgenden Beschreibung der dargestellten Ausführungsbeispiele.

Es zeigen:
Figur 1 eine schematische Darstellung einer Vorrichtung zur Durchführung des erfindungsgemäßen Verfahrens zur Überwachung des Fertigungsprozesses warmgewalzter Rohre anhand einer Online-Erfassung der Topografie der Oberfläche der Rohre mittels Lichtschnittverfahrens und
Figur 2 eine Detaildarstellung eines erfassten Fehlers auf der Oberfläche des Rohres.

Grundsätzlich ist bei dem erfindungsgemäßen Verfahren in allen Fällen eine aus Mess- bzw. Erfassungseinheit bestehende Prüfvorrichtung fest angeordnet und das Rohr bewegt sich in Längs- und/oder Umfangsrichtung darunter hinweg. Vorteilhaft befindet sich die Prüfvorrichtung direkt am Auslauf des Walzgerüstes, um möglichst zeitnah mögliche Abweichungen von der Soll-Topografie des Rohres erkennen und Abhilfemaßnahmen einleiten zu können.

Bei kontinuierlichen Walzverfahren kann die Oberfläche des Rohres schraubenlinienförmig abgetastet werden, wohingegen wie oben beschrieben beim Pilgerverfahren der Walzvorgang diskontinuierlich erfolgt, so dass die Oberfläche entsprechend abschnittweise abgetastet wird.

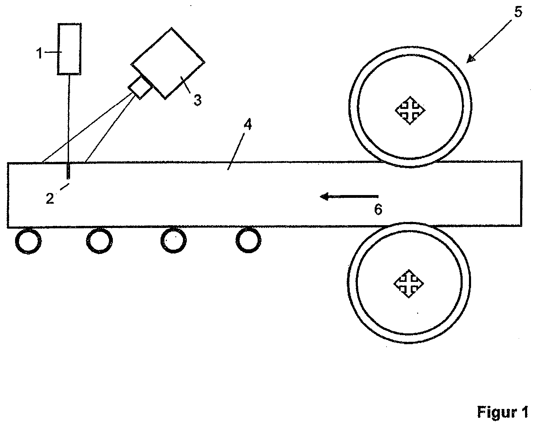

In Figur 1 ist die Vorrichtung zur Durchführung des erfindungsgemäßen Verfahrens zur Überwachung des Fertigungsprozesses warmgewalzter Rohre anhand der Online-Erfassung der Topografie der Oberfläche mittels eines zweidimensionalen Lichtschnittverfahrens dargestellt.

Im Rahmen des Verfahren nutzt eine Messung eine Abbildung der von einem Laser 1 als projizierte Laserlinie 2 fächerförmig bestrahlten Oberfläche des Rohres 4 auf den als Kamera 3 ausgebildeten Detektor. Das Rohr 4 ist in diesem Fall ein Pilgerrohr, das im Walzgerüst 5 mittels zweier Walzen durch Bewegung in die Hauptwalzrichtung 6 und abschnittweises Verdrehen in Umfangsrichtung auf Nennabmessung gewalzt wird. Erfindungsgemäß werden das aufgenommene Oberflächenprofil des Rohres 4 mittels einer hier nicht dargestellten Auswerteeinheit zu einer Topographie zusammen gesetzt und ausgewertet und daraus Rückschlüsse auf den Prozesszustand gezogen.

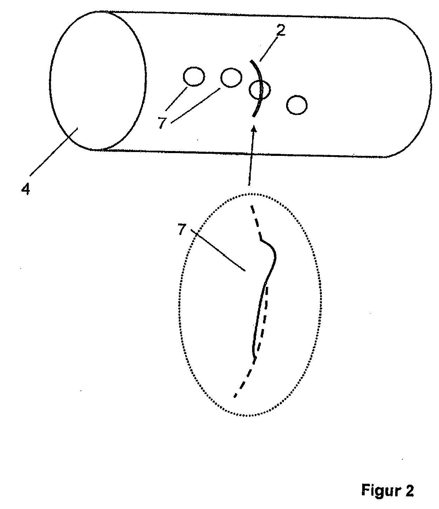

Figur 2 zeigt eine Detaildarstellung von erfassten Oberflächenstrukturen auf der Rohroberfläche, wobei diese Strukturen 7 sich als sogenannte "Pilgerbuckel" darstellen, die in Form, Ausprägung und Abstand voneinander eine Regelmäßigkeit aufweisen und daher Rückschlüsse auf den Prozesszustand zulassen. Einzeln nacheinander zeilenweise aufgenommene Profillinien werden bei fortlaufender Rohrbewegung - typischerweise eine Kombination von Achsial- und Rotationsbewegung - zu dreidimensionalen Oberflächentopographien zusammengesetzt.

Durch eine Muster- und Größenanalyse der aufgenommenen Oberflächentopographien können dann im Vergleich mit bereits bekannten in Datenbanken hinterlegten Ergebnissen bei Überschreitung von Grenzwerten Abhilfemaßnahmen eingeleitet werden.

### Bezugszeichenliste

1 Laser
2 Laserlinie
3 Kamera
4 Rohr
5 Walzgerüst
6 Hauptwalzrichtung
7 Strukturen an der Rohroberfläche

## Patentansprüche

1. Verfahren zur Überwachung eines ein Pilgerschrittverfahren umfassenden Fertigungsprozesses warmgewalzter Rohre (4) aus Stahl, bei dem Art und Ausprägung von durch einen Walzvorgang an einer Außenoberfläche eines Rohres erzeugter Strukturen (7) zu einer Beurteilung des Prozesszustandes ausgewertet werden, **dadurch gekennzeichnet, dass** im unmittelbaren Anschluss an den Walzvorgang im auslaufseitigen Bereich eines Walzgerüstes (5) die Außenoberfläche mindestens eines definierten Abschnittes des Rohres mittels eines optischen Lichtschnittverfahrens zeilenweise und getaktet in Form von Profillinien messtechnisch erfasst wird, die Profillinien anschließend zu einer mindestens zweidimensionalen Topografie zusammengesetzt werden und die Topografie zu einer Beurteilung des Prozesszustandes ausgewertet wird.

2. Verfahren nach Anspruch 1, **dadurch gekennzeichnet, dass** die Topographie der Außenoberfläche automatisiert erfasst wird.

3. Verfahren nach Anspruch 1 und 2, **dadurch gekennzeichnet, dass** die Außenoberfläche des Rohres orts- und zeitaufgelöst erfasst und die hieraus zusammengesetzte Topografie mit einem Referenzbild eines als Referenzkörper dienenden bereits gewalzten Rohres gleicher Stahlgüteklasse und gleicher Nennabmessung des jeweils gleichen Messortes verglichen und zu einer Beurteilung des Prozesszustandes ausgewertet wird.

4. Verfahren nach Anspruch 3, **dadurch gekennzeichnet,**
**dass** aus einer Topografie des Rohres an einem bestimmten Messort etwaig auftretende Strukturen der Oberfläche des Rohres ermittelt werden, die ermittelten Strukturen mit Strukturen einer Topografie des Referenzkörpers für den gleichen Messort verglichen werden und eine signifikante Abweichung zwischen den Strukturen zu einer Beurteilung des Prozesszustandes ausgewertet wird.

5. Verfahren nach mindestens einem der Ansprüche 1 bis 4, **dadurch gekennzeichnet, dass** zusätzlich zur Erfassung der Topografie der Außenoberfläche die Wanddicke am gewalzten Rohr und daraus die Topografie der Innenoberfläche des Rohres ermittelt und zu einer Beurteilung der Prozesszustandes ausgewertet wird.

6. Verfahren nach mindestens einem der Ansprüche 1 bis 5, **dadurch gekennzeichnet, dass** aus einer Vielzahl an den an Referenzkörpern gleicher Stahlgüteklasse und Nennabmessungen ermittelten Topografien an der Außen- und/oder der Innenoberfläche ein Toleranzbereich für Abweichungen festgelegt wird, bei Überschreitung der Grenzen des Toleranzbereichs ein Signal ausgelöst wird.

7. Verfahren nach Anspruch 6, **dadurch gekennzeichnet, dass** das Signal zum Messort am Rohr zugeordnet wird und ein Bezug zu einem zur Überschreitung der Toleranzgrenzen führenden Ereignis im Fertigungsprozess hergestellt wird.

8. Verfahren nach Anspruch 7, **dadurch gekennzeichnet, dass** die jeweils für das gewalzte Rohr ermittelte Zuordnung von Signal und Ereignis in einer Datenbank für jeden Referenzkörper gleicher Stahlgüteklasse und Nennabmessung hinterlegt und bei Überschreitung der Toleranzgrenzen an einem bestimmten Messort das zur Überschreitung der Toleranzgrenzen führende Ereignis angezeigt und als Steuergröße für den Fertigungsprozess verwendet wird.

## Claims

1. A method of monitoring a process, including a back-step method, of producing hot rolled pipes (4) of steel, in which the type and shape of structures (7) produced by a rolling process on an outer surface of a pipe are analysed for an evaluation of the process condition, **characterised in that** directly following the rolling process in the outlet region of a rolling stand the outer surface of at least one defined section of the pipe is metrologically mapped line by line and in synchronism in the form of profile lines by means of an optical light section method, the profile lines are then compiled to form an at least two-dimensional topography and the topography is analysed to make an evaluation of the process condition.

2. A method as claimed in Claim 1, **characterised in that** the topography of the outer surface is mapped in an automated manner.

3. A method as claimed in Claim 1 and 2, **characterised in that** the outer surface of the pipe is mapped in a spatially and temporally resolved manner and the topography compiled from it compared with a reference image of a previously rolled pipe, serving as a reference body, of the same steel quality and the same nominal dimensions of the same measurement location and is analysed to obtain an evaluation of the process condition.

4. A method as claimed in Claim 3, **characterised in that** potentially occurring structures of the surface of the pipe are determined from a topography of the pipe at a specific measurement location, the structures which are determined are compared with structures of a topography of the reference body for the same measurement location and a significant deviation between the structures is analysed to form an assessment of the process condition.

5. A method as claimed in at least one of Claims 1 to 4, **characterised in that** additionally to the determination of the topography of the outer surface the wall thickness of the rolled pipe is determined and the topography of the inner surface of the pipe is determined therefrom and analysed to form an evaluation of the process condition.

6. A method as claimed in at least one of Claims 1 to 5, **characterised in that** a tolerance range for deviations is defined from a plurality of topographies determined on reference bodies of the same steel quality and nominal dimensions at the outer and/or inner surface and when the boundaries of the tolerance range are exceeded a signal is produced.

7. A method as claimed in Claim 6, **characterised in that** the signal is associated with the measurement location on the pipe and a reference is produced to an event in the production process resulting in the tolerance boundaries being exceeded.

8. A method as claimed in Claim 7, **characterised in that** the association of signal and event determined for the rolled pipe is stored in a database for each reference body of the same steel quality and nominal dimensions and when the tolerance boundaries at a specific measurement location are exceeded the event resulting in the tolerance boundaries being exceeded is indicated and is used as a control parameter for the production process.

## Revendications

1. Procédé de surveillance d'un processus de fabrication de tubes laminés à chaud (4) en acier, comprenant une procédure à pas de pèlerin, dans lequel le type et la catégorie de structures (7), générées par une opération de laminage sur une surface extérieure d'un tube, sont exploités pour évaluer l'état du processus, **caractérisé en ce que**, immédiatement après l'opération de laminage dans la zone côté sortie d'une cage de laminoir (5), la surface extérieure d'au moins une partie définie du tube est détectée ligne par ligne et de façon cadencée sous forme de lignes de profil par une technique de mesure utilisant une méthode de coupe optique, les lignes de profil sont ensuite rassemblées pour obtenir une topographie au moins bidimensionnelle et la topographie est exploitée pour évaluer l'état du processus.

2. Procédé selon la revendication 1, **caractérisé en ce que** la topographie de la surface extérieure est détectée automatiquement.

3. Procédé selon la revendication 1 ou 2, **caractérisé en ce que** la surface extérieure du tube est détectée avec une résolution en termes de temps et de point local et la topographie résultante est comparée à une image de référence d'un tube déjà laminé servant de corps de référence de même classe de qualité d'acier et de même dimension nominale du même point local de mesure respectif et est exploitée pour évaluer l'état du processus.

4. Procédé selon la revendication 3, **caractérisé en ce que** l'on détermine à partir d'une topographie du tube à un certain point local de mesure d'éventuelles structures de la surface du tube, on compare les structures déterminées avec des structures d'une topographie du corps de référence pour le même point local de mesure, et on exploite un écart important entre les structures pour évaluer l'état du processus.

5. Procédé selon au moins une des revendications 1 à 4, **caractérisé en ce qu'**en plus de la détection de la topographie de la surface extérieure, on détermine l'épaisseur de paroi au niveau du tube laminé et à partir de là la topographie de la surface intérieure du tube et on exploite celles-ci pour évaluer l'état du processus.

6. Procédé selon au moins une des revendications 1 à 5, **caractérisé en ce que** l'on fixe une plage de tolérance des écarts sur la surface extérieure et/ou intérieure à partir d'une pluralité de topographies, déterminées au niveau du corps de référence de même classe de qualité d'acier et de mêmes dimensions nominales, et on déclenche un signal en cas de dépassement des limites de la plage de tolérance.

7. Procédé selon la revendication 6, **caractérisé en ce que** l'on associe le signal au point local de mesure au niveau du tube et on établit dans le processus de fabrication une relation avec un événement conduisant au dépassement des limites de tolérance.

8. Procédé selon la revendication 7, **caractérisé en ce que** la relation entre le signal et l'événement, qui est déterminée à chaque fois pour le tube laminé, est mémorisée dans une base de données pour chaque corps de référence de même classe de qualité d'acier et de même dimension nominale et, en cas de dépassement des limites de tolérance à un point local de mesure déterminé, on affiche l'événement conduisant au dépassement des limites de tolérance et on l'utilise comme grandeur de commande pour le processus de fabrication.
